Europäisches Patentamt

European Patent Office

Office européen des brevets

(19)

(11) Veröffentlichungsnummer : **0 177 732**
**B1**

(12) EUROPÄISCHE PATENTSCHRIFT

(45) Veröffentlichungstag der Patentschrift :
17.05.89

(51) Int. Cl.⁴ : **B 23 B 31/08**, B 23 B 31/12

(21) Anmeldenummer : 85110780.5

(22) Anmeldetag : 28.08.85

(54) **Gewindeschneidfutter.**

(30) Priorität : 06.10.84 DE 8429380 U

(43) Veröffentlichungstag der Anmeldung :
16.04.86 Patentblatt 86/16

(45) Bekanntmachung des Hinweises auf die Patenterteilung : 17.05.89 Patentblatt 89/20

(84) Benannte Vertragsstaaten :
CH DE FR GB IT LI

(56) Entgegenhaltungen :
CH–A– 597 977
DE–C– 457 781
DE–C– 630 805
DE–C– 666 421
GB–A– 272 662
US–A– 2 865 642
TECHNISCHE RUNDSCHAU, Nr. 7, 16. Februar 1951,
Seite 13, Bern, CH; "Pendelfutter für Werkzeugmaschinen"

(73) Patentinhaber : **Röhm, Günter Horst**
**Heinrich-Röhm-Strasse 50**
**D-7927 Sontheim (DE)**

(72) Erfinder : **Röhm, Günter Horst**
**Heinrich-Röhm-Strasse 50**
**D-7927 Sontheim (DE)**

(74) Vertreter : **Fay, Hermann, Dipl.-Phys. Dr.**
**Ensingerstrasse 21 Postfach 1767**
**D-7900 Ulm (Donau) (DE)**

**Beschreibung**

Die Erfindung betrifft ein Gewindeschneidfutter mit einem zweiteiligen Futterkörper aus einem an eine Antriebsspindel anschließbaren Spindelanschlußstück und einem ein im Futter zu haltendes Werkzeug aufnehmendes Werkzeughalterstück, das mit dem Spindelanschlußstück druck- und zugfest durch ein Gelenk verbunden ist, in dem das Spindelanschlußstück und das Werkzeughalterstück in ihrer Achsenrichtung gegeneinander kippbar sind, und mit einem am Futterkörper verstellbar geführten Sperrglied, das in seiner Führung aus einer Lage, in der es die Kippbewegung zwischen dem Spindelanschlußstück und dem Werkzeughalterstück nicht behindert, in eine das Spindelanschlußstück und das Werkzeughalterstück starr miteinander verbindende Lage verstellbar ist, wozu das Sperrglied als an einem von beiden Futterteilen geführter Gewindering ausgebildet ist, der gegen eine ihm axial gegenüber liegende Ringfläche des anderen Futterteils verspannbar ist.

Gewindeschneidfutter dieser Art sind z. B. von der DE-C-666 421 bekannt und ermöglichen Kippbewegungen zwischen der Achse der Antriebsspindel und der Achse des im Futter gehaltenen Gewindeschneidwerkzeuges, so daß bei von Hand gehaltener und geführter Antriebsmaschine das Gewindeschneidwerkzeug auch dann ein zentriertes Gewinde schneiden kann, wenn die Achse der Antriebsspindel nicht genau mit der Achse der Gewindebohrung und des Gewindeschneidwerkzeuges fluchtet, wenn also die Antriebsmaschine entsprechend schräg gehalten wird. Derartige Gewindeschneidfutter haben sich in der Praxis gut bewährt, und lassen sich auch für Bohrarbeiten mit üblichen Bohrern verwenden, weil das Verkanten des Bohrers gegenüber der Antriebsspindel durch Verstellung des Sperrglieds unterbunden werden kann.

Der Erfindung liegt die Aufgabe zugrunde, ein Gewindeschneidfutter der eingangs genannten Art so weiterzubilden, daß das Werkzeughalterstück auf Werkzeugschäfte verschiedenen Durchmessers eingestellt und elastisch in gleichachsiger Ausrichtung mit dem Spindelanschlußstück gehalten werden kann, so daß das Werkzeughalterstück auch ohne den Gewindering anziehen zu müssen ausreichend gehalten ist.

Diese Aufgabe wird nach der Erfindung dadurch gelöst, daß das Werkzeughalterstück als ein mit Spannbacken für das Werkzeug versehenes Backenführungsstück ausgebildet und normalerweise durch die Kraft einer Feder gleichachsig mit dem Spindelanschlußstück ausgerichtet ist, wobei die gegenseitige Kippbewegung beider Futterteile gegen die Kraft dieser Feder erfolgt, und daß der Gewindering in einem Außengewinde des Spindelanschlußstückes verdrehbar und die ihm gegenüber liegende Ringfläche von der Stirnfläche des Backenführungsstückes gebildet ist.

Vorzugsweise ist der Gewindering in der die Kippbewegung zwischen dem Spindelanschluß-stück und dem Backenführungsstück freigeben-den Lage gegen eine Ringschulter des Spindelanschlußstückes feststellbar, so daß sich der Gewindering nicht selbsttätig in eine die Kippbewegung zwischen beiden Futterteilen behindernde Lage verstellen kann.

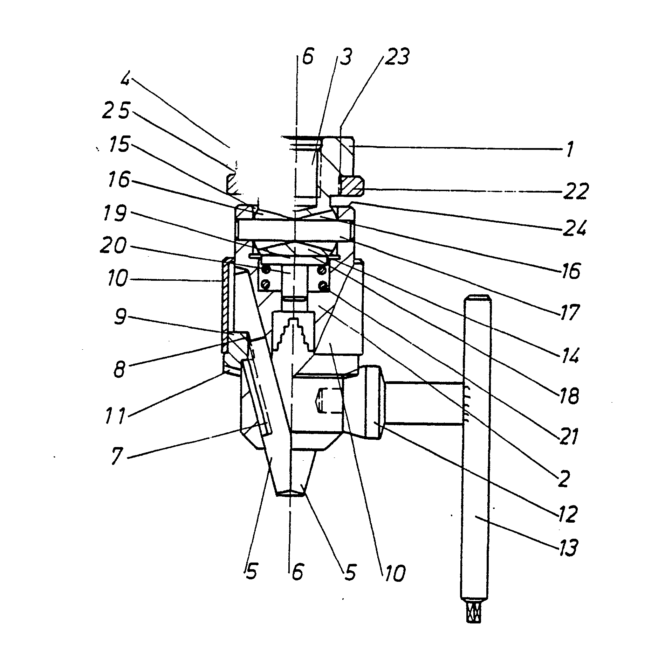

Im folgenden wird die Erfindung an einem in der Zeichnung dargestellten Ausführungsbeispiel näher erläutert ; die einzige Figur zeigt einen Axialschnitt durch ein Gewindeschneifutter nach der Erfindung.

Das in der Zeichnung dargestellte Gewindeschneidfutter besitzt einen zweiteiligen Futterkörper, der aus einem Spindelanschlußstück 1 und einem Backenführungsstück 2 besteht. Das Spindelanschlußstück 1 besitzt eine Aufnahme 3 für den Kopf einer nicht dargestellten Antriebsspindel, an der es mittels einer Klemmeinrichtung 4 feststellbar ist. Das Backenführungsstück 2 enthält die Spannbacken 5 für das im Futter einzuspannende Werkzeug, das selbst ebenfalls nicht dargestellt ist. Die Spannbacken 5 sind im Backenführungsstück 2 schräg gegen die Achse 6-6 des Futterkörpers geführt und außenseitig mit einer Verzahnung 7 versehen, die in ein Innengewinde 8 eines am Backenführungsstück 2 drehbar gelagerten Spannringes 9 greift. Der Spannring 9 trägt in üblicher Weise eine Spannhülse 10 und besitzt stirnseitig einen Zahnkranz 11, in den zum Spannen und Lösen des Futters das Ritzel 12 eines am Backenführungsstück 2 ansetzbaren Spannschlüssels 13 greift. Durch Verdrehen des Spannringes 9 von Hand an der Spannhülse 10 oder mittels des Spannschlüssels 13 werden die Spannbacken 5 im Backenführungsstück 2 vor- und zurückgeschoben.

Das Backenführungsstück 2 ist mit dem Spindelanschlußstück 1 druck- und zugfest durch ein Gelenk verbunden. Das Gelenk ist durch einen Gelenkkopf 14 des Spindelanschlußstückes 1 und einer Aufnahme 15 des Backenführungsstückes 2 gebildet. In der Aufnahme 15 ist der Gelenkkopf 14 zentriert und drehbar gehalten. Der Gelenkkopf 14 ist mit einer doppelkonischen Aussparung 16 versehen, die von einem Querbolzen 17 durchgriffen ist, der an beiden Enden in der die Aufnahme 15 begrenzenden Wand des Backenführungsstückes 2 gehalten ist. Vorderseitig ist der Gelenkkopf 14 mit einer Planfläche 18 versehen, die einem Teller 19 anliegt, der mit einem Zapfen 20 verschiebbar im Backenführungsstück 2 geführt ist und durch eine Feder 21 gegen den Gelenkkopf 14 angedrückt ist. Im Ergebnis ermöglicht das Gelenk eine Verstellung des Spindelanschlußstückes 1 gegenüber dem Backenführungsstück 2 um zwei zueinander senkrechte Achsen, wobei die eine dieser Achsen durch die Achse des Querbolzens 17 gebildet ist. Das Spindelanschlußstück 1 kann also relativ zum Backenführungsstück 2 allseitig gekippt werden, wobei aber der durch die Feder 21 gegen die Planfläche 18 des Gelenkkopfes 14 angedrückte Teller 19 normalerweise eine Ausrichtung des Spindelanschlußstückes 1 gegenüber dem Backenführungsstück 2 derart bewirkt, daß die Achsen des Spindelanschlußstückes 1 und des Backenführungsstückes 2 miteinander fluchten, wie es die Zeichnung zeigt. Diese Kippbewegungen zwischen dem Spindelanschlußstück 1 und dem Backenführungsstück 2 können mittels eines als Gewindering 22 ausgebildeten Sperrgliedes ausgeschaltet werden. Dazu ist der Gewindering 22 aus seiner in der Zeichnung dargestellten, die Kippbewegung zwischen dem Spindelanschlußstück 1 und dem Backenführungsstück 2 nicht behindernden Lage in eine das Spindelanschlußstück 1 und das Backenführungsstück 2 starr miteinander verbindende Lage verstellbar, nämlich im Gewinde 23 axial soweit nach vorn gegen das Backenführungsstück 2 verdrehbar, daß der Gewindering 22 der ihm axial gegenüber liegenden Ringfläche 24 des Backenführungsstückes 2 anliegt und in seinem Gewinde 23 gegen diese Ringfläche 24 verspannt ist. Dadurch entsteht eine kraft- und formschlüssige Verbindung zwischen dem Spindelanschlußstück 1 und dem Backenführungsstück 2, zwischen welchen dann keinerlei Kippbewegungen mehr möglich sind. Der Gewindering 22 ist in einem Außengewinde des Spindelanschlußstückes 1 verdrehbar und die ihm gegenüberliegende Ringfläche 24 ist von der Stirnfläche des Backenführungsstückes 1 gebildet. In der die Kippbewegung zwischen dem Spindelanschlußstück 1 und dem Backenführungsstück 2 freigebenden, in der Zeichnung dargestellten Lage kann der Gewindering 22 gegen eine Ringschulter 25 des Spindelanschlußstückes 1 verspannt werden, so daß er sich unter dem Einfluß der von der Antriebsmaschine bzw. dem Gewindeschneidwerkzeug auf den Futterkörper übertragenen Vibrationen nicht selbsttätig lösen und in eine die Kippbewegung beider Futterteile 1, 2 gegeneinander behindernde Lage verstellen kann. Mit gegen die Ringfläche 24 verspanntem Gewindering 22 kann das Gewindeschneidfutter als übliches Bohrfutter betrieben werden.

## Patentansprüche

1. Gewindeschneidfutter mit einem zweiteiligen Futterkörper aus einem an eine Antriebsspindel anschließbaren Spindelanschlußstück (1) und einem ein im Futter zu haltendes Werkzeug aufnehmendes Werkzeughalterstück (2), das mit dem Spindelanschlußstück (1) druck- und zugfest durch ein Gelenk verbunden ist, in dem das Spindelanschlußstück (1) und das Werkzeughalterstück (2) in ihrer Achsenrichtung gegeneinander kippbar sind, und mit einem am Futterkörper verstellbar geführten Sperrglied, das in seiner Führung aus einer Lage, in der es die Kippbewegung zwischen dem Spindelanschlußstück (1) und dem Werkzeughalterstück (2) nicht behindert, in eine das Spindelanschlußstück (1) und das Werkzeughalterstück (2) starr miteinander verbindende Lage verstellbar ist, wozu das Sperrglied als an einem von beiden Futterteilen (1, 2) geführter Gewindering (22) ausgebildet ist, der gegen eine ihm axial gegenüber liegende Ringfläche (24) des anderen Futterteils verspannbar ist, dadurch gekennzeichnet, daß das Werkzeughalterstück (2) als ein mit Spannbacken (5) für das Werkzeug versehenes Backenführungsstück ausgebildet und normalerweise durch die Kraft einer Feder (21) gleichachsig mit dem Spindelanschlußstück (1) ausgerichtet ist, wobei die gegenseitige Kippbewegung beider Futterteile (1, 2) gegen die Kraft dieser Feder (21) erfolgt, und daß der Gewindering (22) in einem Außengewinde des Spindelanschlußstückes (1) verdrehbar und die ihm gegenüber liegende Ringfläche (24) von der Stirnfläche des Backenführungsstückes gebildet ist.

2. Gewindeschneidfutter nach Anspruch 1, dadurch gekennzeichnet, daß der Gewindering (22) in der die Kippbewegung zwischen dem Spindelanschlußstück (1) und dem Backenführungsstück (2) freigebenden Lage gegen eine Ringschulter (25) des Spindelanschlußstückes (1) feststellbar ist.

## Claims

1. A screw cutting chuck having a two-part chuck body comprising a spindle connecting portion (1) which can be connected to a drive spindle and a tool holder portion (2) which accommodates a tool to be held in the chuck and which is connected to the spindle connecting portion (1) in such a way as to withstand compression and tensile forces by a pivot means in which the spindle connecting portion (1) and the tool holder portion (2) can be tilted relative to each other in their axial direction, and having a locking member which is mounted displaceably on the chuck body and which is displaceable in its mounting from a position in which it does not impede the tilting movement as between the spindle connecting portion (1) and the tool holder portion (2) into a position in which it rigidly interconnects the spindle connecting portion (1) and the tool holder portion (2), for which purpose the locking member is in the form of a screwthreaded ring (22) which is guided on one of the two chuck portions (1, 2) and which can be braced against an annular surface (22), which is disposed in axially opposite relationship thereto, on the other chuck portion, characterised in that the tool holder portion (2) is in the form of a jaw guide portion provided with clamping jaws (5) for the tool and is normally oriented by the force of a spring in coaxial relationship with the spindle connecting portion (1), wherein the mutual tilting movement of the two chuck portions (1, 2) occurs against the force of said spring (21), and that the screwthreaded ring (22) is rotatable in an external screwthread on the spindle connecting portion (1) and the annular surface (24) in opposite relationship thereto is formed by the end face of the jaw guide portion.

2. A screw cutting chuck according to claim 1 characterised in that the screwthreaded ring (22) can be fixed against an annular shoulder (25) on the spindle connecting portion (1) in the position of permitting the tilting movement as between the spindle connecting portion (1) and the jaw guide portion (2).

**Revendications**

1. Mandrin de filetage comportant un corps formé de deux éléments incluant un élément (1) de raccordement d'une broche, qui peut être raccordé à une broche d'entraînement, et un élément (2) formant porte-outil, qui reçoit un outil devant être maintenu dans le mandrin et est relié à l'élément (1) de raccordement de la broche, de façon à résister à une compression et à une traction, au moyen d'une articulation, dans laquelle les directions axiales de l'élément (1) de raccordement de la broche et de l'élément formant porte-outil (2) peuvent basculer l'une par rapport à l'autre, et comportant un organe de blocage, qui est guidé de manière à être déplaçable sur le corps du mandrin et peut être déplacé, dans son guide, depuis une position, dans laquelle il ne gêne pas le mouvement de basculement entre l'élément (1) de raccordement de la broche et l'élément (2) formant porte-outil, dans une position, dans laquelle l'élément (1) de raccordement de la broche et l'élément (2) formant porte-outil sont reliés entre eux rigidement, l'organe de blocage étant réalisé sous la forme d'une bague taraudée (22) guidée sur l'un des deux éléments (1, 2) du mandrin et pouvant être serrée contre une surface annulaire (24), disposée axialement en vis-à-vis de la bague, de l'autre élément du mandrin, caractérisé en ce que l'élément (2) formant porte-outil est réalisé sous la forme d'un élément de guidage à mâchoires, comportant des mâchoires de serrage (5) pour l'outil et aligné normalement sur le même axe que l'élément (1) de raccordement de la broche, sous l'action de la force d'un ressort (21), le mouvement réciproque de basculement des deux éléments (1, 2) du mandrin s'effectuant à l'encontre de la force de ce ressort (21), que la bague taraudée (22) peut tourner dans un filetage extérieur de l'élément (1) de raccordement de la broche et que la surface annulaire (24), située en vis-à-vis de la bague, est formée par la surface frontale de l'élément de guidage à mâchoires.

2. Mandrin de filetage selon la revendication 1, caractérisé en ce que la bague taraudée (22) peut être bloquée contre un épaulement annulaire (25) de l'élément (1) de raccordement de la broche, dans la position autorisant le mouvement de basculement entre l'élément (1) de raccordement de la broche et l'élément (2) de guidage à mâchoires.